# EUROPEAN PATENT APPLICATION

(11) **EP 2 251 794 A1**
(43) Date of publication of application: **17.11.2010**
(21) Application number: 10162456.7
(22) Date of filing: 10.05.2010
(51) Int. Cl.: G06F 15/78, G06F 17/50, G06Q 40/00

(54) **Very low latency processing device for data packets particular to a specific application**

(30) Priority: 08.05.2009 FR 0953077
(71) Applicant: HPC Platform SAS, 92200 Neuilly sur Seine (FR)
(72) Inventor: Battyani, Marc, 77850, Héricy (FR); Le Rolland, Eric, 92200, Neuilly sur Seine (FR)
(74) Representative: Lebkiri, Alexandre

(57) **Abstract**

This invention relates to a very low latency processing device (110) for source data (111, 111') relating to specific operations, this source data (111, 111') being transmitted via at least one communication network in the form of packets encoded according to a protocol particular to the specific operations and supported by the communication network, **characterised in that** it includes at least one logic circuit (112) configured for processing this source data (111, 112') in an autonomous manner via a predetermined structure so that the transmission of data (111, 111') in this structure enables the packets to be received, their source data (111, 111') to be processed and the final data (119, 119') generated by this processing operation to be transmitted.

## Description

This invention relates to a very low latency processing device for data packets particular to a specific application, in particular to a financial application.

### The prior art:

An increasing number of technological innovations have arisen from professional applications in which computing is a management and/or decision making tool.

Thus, banks and main financial players have become centres for IT development, recognised for both the quality and quantity of the investments made in technological research.

Financial data processing thus requires particularly high-performance computing systems for processing a high level of data within a set and limited timeframe and with a high level of reliability.

A known example of this is represented by financial market servers which process a flow of information capable of reaching as high as several million network packets per second, with a high level of reliability, as described in the patent request US 2008/0243675 A1.

The processing time for a data packet by a device is hereinafter referred to as "latency", such a latency being typically defined by an average value, a standard deviation and/or a maximum value.

In a server aiming at processing financial operations, this latency is preferably limited and deterministic, i.e. can be determined according to the parameters of use of the device, in order to process these operations according to precise rules.

As a result, a server processing financial data, for example relating to operations in the stock exchange, must comply with a chronology of arrival so as to be able to correspond the sell orders with the buy orders according to this chronology (critical order book management).

In any event, such a chronology cannot be correctly complied with if these orders are not transmitted and/or processed in similar timeframes.

In addition, a significant latency in data processing causes the potential loss of opportunities in the stock exchanges for a user if, for example, his/her offer is processed less quickly than a competing offer.

### The problem in the prior art:

The devices previously described have a latency, which is determined by considering the average processing times observed over several packets, and is typically more than several tens or hundreds of microseconds.

Moreover, the standard deviation is relatively significant and variable in time, in particular according to the number of messages processed by a server capable of becoming overwhelmed by an excess of messages.

As a result, the "latency" of a financial operation, i.e. the duration of its execution by computing devices, results from the addition of the latencies of all of the elements implemented for the execution of this operation.

Therefore, the higher the random variations presented by these latencies - which, in some examples, are added together and in other examples compensate each other - the more the standard deviation of the latency of the financial operation increases.

It thus appears that the processing times for financial operations processed by known devices, with the best performing devices including latencies of approximately several tens or hundreds of microseconds, are high and vary significantly to the extent of degrading the overall performance and operation of the financial applications.

### The invention:

The invention is a result of the observation that the devices according to the prior art have a raised latency, standard deviation and divergence due to the use of integrated components, whose overall operation is random. For example, the transmission of data in a device between different transmitting components and receiving components via the same communication bus - data bus, address bus and control bus - or the use of control units - still referred to as a processor or CPU (Central Processing Unit) for managing the distribution in addition to the synchronisation of physical and/or logic resources of this device - generates random timeframes for data processing operations and data transmissions.

Therefore, the invention relates to a very low latency processing device for source data relating to specific operations, this source data being transmitted via at least one communication network in the form of packets encoded according to a protocol particular to the specific operations and supported by the communication network, **characterised in that** it includes a logic circuit configured for processing this source data in an autonomous manner via a predetermined structure so that the transmission of data in this structure enables the packets to be received, their source data to be processed and the final data generated by this processing operation to be transmitted.

Such a device has numerous advantages. In particular, it enables managing source data specific to a professional application with strict requirements in terms of latency and determinism, such as financial applications.

As a result, a device according to the invention does not include a central processing unit or CPU for processing the data and generating the final data, a CPU not being capable of ensuring a latency and determinism comparable to a device according to the invention, taking into account the timeframes and hazards specific to communications between the CPU and the logic and physical means that it generates and synchronises.

In fact, the use of a device equipped with a central processing unit (CPU) executing a programme comprised of basic instructions stored in memory - according to the prior art - must introduce delays in the transmission of internal data via data buses and in the management and synchronisation of the physical resources that it controls.

Inversely, a device according to the invention has a very low latency, practically limited to the transmission time of the packets within the circuit. In other words, this latency is practically incompressible and close to an "absolute minimum latency", as it is approximately equal to the physical time of execution of the hardware.

Moreover, a device according to the invention is particularly reliable as the data processing operation performed is fully predetermined by its configuration, and not by the nature or flow of data received. Thus, all of the data received is processed within a deterministic timeframe.

Therefore, the source data processing time is particularly predictable as, with the logic circuit being autonomous for the data processing operation, the variations in the processing time of the packets received are limited to the known operating variations, and are particularly low, with hardware blocks forming this logic circuit. The data processing speed is and remains independent from the processed data flow.

In addition and contrary to the example of a processor which can only successively execute a reduced number of instructions predetermined during its manufacture, a device according to the invention can simultaneously execute a large number of logic operations which can be specialised and optimised for processing operations performed in professional applications by subsequent logic programming, this possibility being connected to the intrinsic characteristics of the reconfigurable logic circuits - in particular FPGAs - and their programming possibilities.

In order to ensure its operation, the synchronisation management between the different hardware, the translation of the different tasks to be performed and which are also referred to as "logic blocks", is itself performed simultaneously with the use of other hardware. This synchronisation is performed at several levels and also enables the different paradigms encountered to be managed in parallelism: micro-parallelism (fine grain), intra-device parallelism (medium grain) and inter-device parallelism (coarse grain).

Contrary to prior devices which use data buses to transmit data between the different processing elements such as processors (CPUs), memories, network communication cards and data processing logic elements, a device according to the invention allocates physical connections specific to the memories, physical communication network interfaces (hereinafter referred to as PHYs) and other logic elements capable of exchanging data.

Thus, and contrary to a data bus classically implemented between multiple sources and multiple destinations, these direct physical connections guarantee a practically minimum latency. In other words, they avoid the bottleneck phenomena from arising, given that each element of the device has its own physical connection in the event of transmission.

The use of the logic circuit has numerous other advantages: for example, the electrical consumption of such a circuit is particularly low as the power supply to the logic blocks, once configured, is very low when compared to the power supply required by a non-specialised, integrated circuit such as a CPU.

Finally, it should be noted that the risk of contamination by a virus is practically non-existent as a logic circuit performs a series of operations determined by its logic structure that is both pre-programmed and independent from the data received. Any data item received that does not conform to a predetermined protocol corresponding to the specific application for which the device is implemented, will not be processed and cannot therefore contaminate the client applications for the final data produced by the device according to the invention.

This aspect reduces the latency of a system comprising a processing device according to the invention, connected to one or several servers, to which the final data resulting from the processing operations is sent. In fact, the server can accept final data provided by the device without requiring protection from any firewall-type protection software, which slows down data transmission.

In other words, the processing device relating to the invention operates as a firewall, being both applicative and deterministic with very low levels of latency.

It should be noted that a processing device according to the invention requires specific programming, which is particularly complex and not intuitive, and which does not use the predefined functions but specialised logic function for the processing operations to be performed in the relevant application.

However, the use of design aid tools for these logic functions and, in particular, specialised compilers for Domain Specific Languages (DSLs), enables overcoming this disadvantage that is overly compensated by the technical advantages obtained by implementing a very low latency processing device for network packets according to the invention.

Moreover, it should be noted that the variety of data capable of being taken into account by such a low latency device is limited by the requirement of using physical means (hardware) to perform the operations specific to each type of data. This is why such a device is particularly advantageous in data processing, where packets of data, particular to a specific application such as a limited number of packet formats and/or data formats, must be processed by the device.

Such is the case in financial applications, as the number of financial operations - orders - that must be executed is relatively limited, for example a maximum number of approximately 60 different messages can be considered for passing orders to the Paris stock exchange.

In a similar manner, the various financial operations - the updated order book for the different financial instruments, indexes and updated portfolios, the updated relevant financial indicators on the different instruments and all of the unitary events and modifications on the different instruments - are implemented via a limited number of operations.

In one embodiment, the structure of the logic circuit comprises logic blocks organised in a successive manner in such a way that the blocks perform successive operations with the source data being processed.

According to one embodiment, the data processing operation comprises at least one of the following operations: a reception, filtering, decoding, decompression, recording in memory, calculation, formatting, compression or transmitting operation.

In one embodiment, each block performs the same processing operation for the data being processed.

According to one embodiment, the device has several inputs and/or several outputs in such a way that several source or final data items can be processed in parallel within the logic blocks.

In one embodiment, the device comprises a logic block for processing source data according to at least one of the following operations: a decompression, copying, sorting, sending, calculation, encoding and/or compression operation of the source data.

According to one embodiment, the device comprises the use of a compiler aimed at automatically generating the description of the architecture of the processing logic blocks from a description in a language particular to the specific application.

In one embodiment, the logic circuit is configured with a code according to a reconfigurable logic programming.

In one embodiment, the reconfigurable logic circuit is an FPGA (Field-Programmable Gate Array) type programmable logic component.

According to one embodiment, the device is connected to at least one client terminal via a dedicated connection, for example a PCI Express, Infini-Band, Hyper Transport, QuickPath, Fibre Channel or Gigabit Ethernet type connection.

In one embodiment, the device has several physical connection interfaces (PHYs) to communication networks, each interface being connected to dedicated logic blocks, the device being capable of transmitting and/or receiving data in a parallel manner over these interfaces.

According to one embodiment, the device is **characterised in that** at least one of the physical interfaces (PHYs) directly connected to the processing logic elements is a Gigabit Ethernet interface.

In one embodiment, at least one of the physical interfaces (PHYs) directly connected to the processing logic elements is a PCI Express interface and that at least one other physical interface (PHY) directly connected to the processing logic elements is a Gigabit Ethernet type interface.

In one embodiment, at least two physical interfaces (PHYs) directly connected to the processing logic elements are PCI Express interfaces so as to enable simultaneous direct connections with several different computers.

According to one embodiment, the device comprises network interfaces exclusively allocated to a single client terminal.

In one embodiment, the device comprises a logic block configured so as to recreate and update an order book for financial stock exchanges.

According to one embodiment, the device comprises a logic block configured in the form of a deterministic state machine for processing encoded data complying with a normative framework comprising a limited number of possible formats.

In one embodiment, the logic block configured in the form of a deterministic state machine comprises means for decompressing encoded data according to a compression and encoding format.

According to one embodiment, the compression and encoding format is the FAST format.

In one embodiment, the device comprises a compiler directly transforming the descriptions of the formats of financial messages in text format into the description of a logic block implementing the decoding operation for these messages.

According to one embodiment, the compiler directly transforms the descriptions of financial messages complying with a compression and encoding format (FAST) into the description of a logic block implementing the decoding operation for these messages with the use of state machines.

In one embodiment, the device comprises a logic block configured for executing at least one of the following financial operations: a calculation of the index, stock exchange portfolio value, weighted average, for example VWAP (Volume-Weighted Average Price) and/or any other financial indicator calculation from the data contained in the packets received.

According to one embodiment, the device comprises a logic block configured so as to activate the sending of specific messages over a communication interface when a particular condition has been detected or calculated from the data contained in the packets received.

In one embodiment, the device comprises a logic block configured so as to activate the sending of specific messages over one of the communication interfaces when a price and a quantity of financial products available for purchase or sale corresponding to predetermined criteria have been detected or calculated from the data contained in the packets received.

According to one embodiment, the device comprises a logic block configured so as to consolidate and sort the quantities by price of financial products available for purchase or sale from the list of buy orders and sell orders contained in the packets of data received.

In one embodiment, the device comprises a logic block configured so as to implement a protocol guaranteeing the fast transmission without data loss between 2 devices according to the invention and/or between compatible client devices with a very low latency for processing a data packet of less than 10 microseconds, advantageously of less than 5 microseconds and very advantageously of less than 1 microsecond.

According to one embodiment, the device comprises logic blocks configured so as to implement a compression operation upon sending and a decompression operation upon reception of data transmitted between two devices according to the invention and/or between compatible client devices.

According to one embodiment, the invention relates to a device **characterised in that** it comprises logic blocks configured so as to implement data filtering and data time stamping with a reliability based on the compatibility, and/or the eventual simultaneous use of protocol IEEE1588, of a Synchronous Ethernet function and a GPS clock at the reception of data transmitted from another device according to the invention and/or a client device.

The invention also relates to a very low latency processing method for source data relating to specific operations, this source data being transmitted via at least one communication network in the form of packets encoded according to a protocol particular to the specific operations and supported by the communication network, **characterised in that** it uses a device according to one of the previous embodiments, comprising a logic circuit configured for processing this source data in an autonomous manner via a predetermined structure so that the transmission of data in this structure enables the packets to be received, their source data to be processed and the final data generated by this processing operation to be transmitted.

The invention also relates to control means, for example software-type means aimed at controlling a very low latency processing device for source data relating to specific operations, this source data being transmitted via at least one communication network in the form of packets encoded according to a protocol particular to the specific operations and supported by the communication network, **characterised in that**, this device complying with one of the previous embodiments, these control means configure a logic circuit configured for processing this source data in an autonomous manner via a predetermined structure so that the transmission of data in this structure enables the packets to be received, their source data to be processed and the final data generated by this processing operation to be transmitted.

The invention also relates to control means aimed at controlling a very low latency processing device for source data relating to specific operations, this source data being transmitted via at least one communication network in the form of packets encoded according to a protocol particular to the specific operations and supported by the communication network, **characterised in that**, this device complying with one of the previous embodiments, these control means configure a logic circuit configured for processing this source data in an autonomous manner via a predetermined structure so that the transmission of data in this structure enables the packets to be received, their source data to be processed and the final data generated by this processing operation to be transmitted.

This invention will be better understood after reading the following description with reference to the appended figures, from which:
- figure 1 represents a low latency processing device for data packets particular to a specific application according to the invention, and
- figure 2 represents two low latency processing devices according to the invention in their network environment.

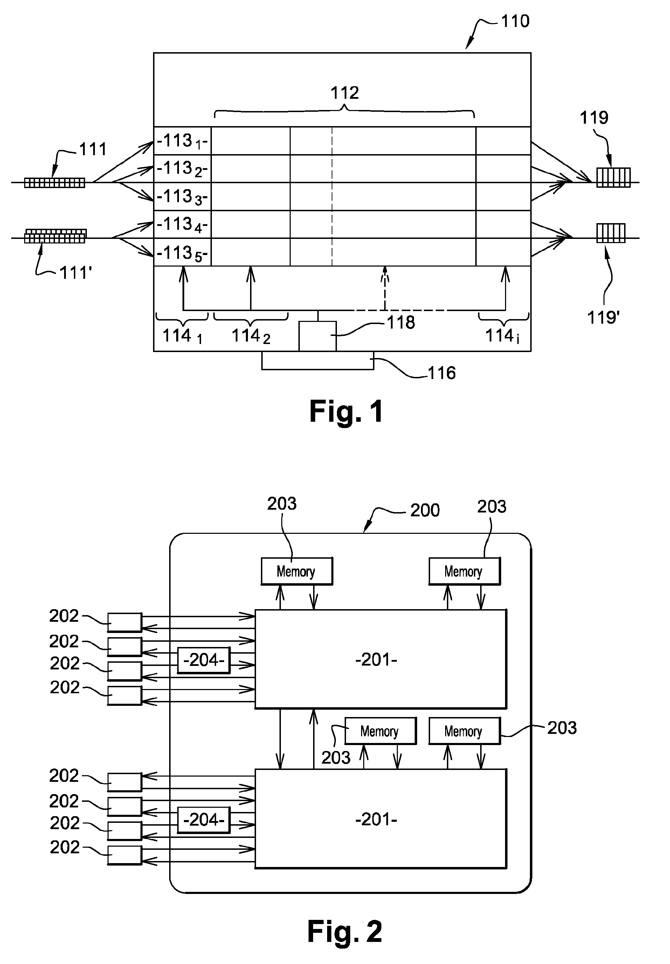

With reference to figure 1, a very low latency processing device 110 for data packets dedicated to an application comprises a logic circuit 112 configured in the form of logic blocks 114₁, 114₂, ... 114ᵢ each with series of associated logic gates according to a predetermined structure or architecture for receiving source data 111 or 111', filtering this data, processing this data and transmitting this data in the form of final data 119 or 119'.

In order to be capable of modifying the configuration of the logic gates making up these blocks, the device 110 has an interface 116 enabling a user to use a specialised compiler 118 generating a specification of hardware functions to be performed.

Such a specification is written in a hardware function description language, typically in VHDL (Very high speed integrated circuit Hardware Description Language).

For example, a direct logic description or a logic description via such a compiler, enables a logic block to be configured so as to perform the data processing operations, which can include connection operations (reception and/or transmission), memory recording operations - for example of the order books, quotation values or operations to be performed - and/or in a more general manner, a technical or functional operation.

In other words, the logic circuit remains configured according to a predetermined structure, independent of the nature and/or quantity of the packets received, until a new configuration is required.

Such a very low latency processing device 110 for network packets can include logic blocks 114ⱼ for decoding, decompressing, filtering, encoding, compressing and/or transmitting data within a particularly low latency time of approximately one microsecond, and with a very low level of variation.

More precisely, the latency can be determined according to the size and content of the packets processed. In fact, the processing times for a data packet are only dependent on the size and content of this packet, taking into account the absence of CPU and/or buses generating conflicts within the servers according to the prior art.

In this embodiment, the low latency processing device for data packets comprises an input stack with one or multiple gates 113₁, 113₂, 113₃, 113₄ and 113₅ - acting as a physical interface (PHY) between the device 112 and an exclusively dedicated client terminal - enabling the fast decoding and parallel processing of multiple data packets, whereas an output stack can be connected to one or multiple outputs (in unicast or multicast mode, or even direct memory access) with addressees, output formats and final data that can be different per output channel.

Moreover, in this embodiment, the device 110 comprises a logic block performing a firewall function, sorting the packets and/or data received according to their applicative content and nature in such a way that any packets that are not compliant with the specific applications associated with device 110 are destroyed.

This function can enable the low latency processing device for network packets to be used directly with external flows without prior intervention from an external firewall creating additional delays in data transmission.

This invention is susceptible to numerous variations. In particular, a low latency processing device for network packets according to the invention can be used to implement, in an independent or joint manner and with a level of latency remaining close to one microsecond:
- Feed handling operations for financial data,
- Algorithmic trading operations regarding the financial data,
- Encoding, compression and/or decompression operations in order to speed up the transmission of packets and reduce the latency of this transmission operation within the communication networks.

In one embodiment of the invention, the low latency processing device for network packets comprises a library of specialised and optimised FPGA executable cores connected either to a specific professional application - such as specific calculations for the financial market (example: calculation of operations of futures and connected indicators), or to technical or interface issues - such as IP formatting or encoding into specific formats.

With reference to figure 2, the invention also relates to a device 200 according to the invention, using one or several logic circuits 201 configured for the low latency processing of packets according to the invention, for example according to the device 110 previously described and connected together with direct connections.

More precisely, this device 200 uses logic circuits 201 connected to multiple networks and client terminals 202, for example via one or several PCI Express type connections 204 enabling device 200 to directly access the memory of the client devices, via Infiniband, or more simply via Gigabit Ethernet network connections 1 or 10 in unicast or multicast mode.

In order to meet the requirements of some types of data processing operations, this device 200 can contain memories 203 connected to logic circuits 201, to which they are dedicated via direct connections.

Thus, the device 200 is a central processing node with respect to the client terminals equipped with processor-type (CPU) components.

Such a system thus uses device 200 in order to transmit filtered, processed data to each client terminal within the best possible timeframe, i.e. with a low latency.

The latter can then recover this source data - or final data - so as to use it for other processing operations.

This invention is susceptible to numerous variations or embodiments. For example, a device according to the invention might comprise logic blocks configured so as to implement data filtering and data time stamping with a reliability based on the compatibility, and/or the eventual simultaneous use of protocol IEEE1588, of a Synchronous Ethernet function and a GPS clock at the reception of data transmitted from another device according to the invention and/or a client device.

The field of applications of a device according to the invention can include any application requiring a very low latency, such as, as a rough guide and in no way as a limited guide, fields of fundamental or applied research in addition to technological development, the fields of biology, medicine, physics, mathematics, computing, nuclear energy or chemistry, and also in applied fields such as security or parallel computing.

## Claims

1. A very low latency processing device (110, 200) for source data (111, 111') relating to specific operations, this source data (111, 111') being transmitted via at least one communication network in the form of packets encoded according to a protocol particular to the specific operations and supported by the communication network, **characterised in that** it includes at least one logic circuit (112, 201) configured for processing this source data (111, 111') in an autonomous manner via a predetermined structure so that the transmission of data (111, 111') in this structure enables the packets to be received, their source data (111, 111') to be processed and the final data (119, 119') generated by this processing operation to be transmitted.

2. A device (110, 200) according to claim 1, **characterised in that** the structure of the logic circuit (112) comprises logic blocks (114₁, 114₂, ... 114_{¡}) organised in a successive manner in such a way that the blocks perform successive operations with the source data (111, 111') being processed.

3. A device (110, 200) according to claim 2, **characterised in that** the data processing operation comprises at least one of the following operations: a reception, filtering, decoding, decompression, recording in memory, calculation, formatting, compression or transmitting operation.

4. A device (110, 200) according to one of claims 1, 2 or 3, **characterised in that** each block (114₁, 114₂, ...114ᵢ) performs the same processing operation independently from the data being processed.

5. A device (110, 200) according to one of the previous claims, **characterised in that** it has several inputs and/or several outputs in such a way that several source (111, 111') or final (119, 119') data items can be processed in parallel within the logic blocks (114₁, 114₂, ...114ᵢ).

6. A device (110, 200) according to one of the previous claims, **characterised in that** it comprises a logic block for processing source data according to at least one of the following operations: a decompression, copying, sorting, sending, calculation, encoding and/or compression operation of the source data.

7. A device (110, 200) according to one of the previous claims, **characterised in that** it comprises the use of a compiler (118) aimed at automatically generating the description of the architecture of the processing logic blocks from a description in a language particular to the specific application.

8. A device (110, 200) according to one of the previous claims, **characterised in that** the logic circuit (112) is configured with a code according to a reconfigurable logic programming.

9. A device (110, 200) according to claim 8, **characterised in that** the reconfigurable logic circuit (112) is an FPGA (Field-Programmable Gate Array) type programmable logic component.

10. A device (200) according to one of the previous claims, **characterised in that** it is connected to at least one client terminal (202) via a dedicated connection (204), for example a PCI Express, Infini-Band, Hyper Transport, QuickPath, Fibre Channel or Gigabit Ethernet type connection.

11. A device (110, 200) according to one of the previous claims, **characterised in that** it has several physical connection interfaces (113₁, 113₂, 113₃, 113₄, 113₅) to communication networks, each interface being connected to dedicated logic blocks, the device (110, 200) being capable of transmitting and/or receiving data in a parallel manner over these interfaces.

12. A device (110, 200) according to one of the previous claims, **characterised in that** it comprises a logic block configured so as to recreate and update an order book for financial stock exchanges.

13. A device (110, 200) according to one of the previous claims, **characterised in that** it comprises a logic block configured in the form of a deterministic state machine for processing encoded data complying with a normative framework comprising a limited number of possible formats.

14. A device (110, 200) according to one of the previous claims, **characterised in that** it comprises a compiler (118) directly transforming the descriptions of the formats of financial messages in text format into the description of a logic block implementing the decoding operation for these messages.

15. A device (110, 200) according to one of the previous claims **characterized in that** it comprises logic blocks configured so as to implement data filtering and data time stamping which extreme precision with extremely low deviation is guaranteed by the compatibility, and/or the eventual simultaneous use of protocol IEEE1588, of a Synchronous Ethernet function and a GPS clock at the reception of data transmitted between two devices according to the invention and/or between client devices compliant with the invention.
